# FASCICULE DE BREVET EUROPEEN

(11) **EP 0 966 494 B1**
(45) Date de publication et mention de la délivrance du brevet: **03.07.2002**
(21) Numéro de dépôt: 98913869.8
(22) Date de dépôt: 09.03.1998
(51) Int. Cl.: C08F 283/01, C09D 4/06, C09D 167/06

(54) **COMPOSITIONS DE PEINTURE ROUTIERE ET PROCEDE POUR DIMINUER LE DELAI D'ATTENTE AVANT CIRCULATION SUR UNE CHAUSSEE NOUVELLEMENT MARQUEE**
STRASSENMARKIERUNGSZUSAMMENSETZUNGEN UND VERFAHREN UM DIE WARTEZEIT FÜR DIE WIEDERBENUTZUNG EINER NEU MARKIERTEN STRASSE ZU REDUZIEREN
TRAFFIC PAINT COMPOSITIONS AND METHOD FOR REDUCING THE DELAY FOR RESUMPTION OF TRAFFIC ON A NEWLY MARKED ROAD

(30) Priorité: 10.03.1997 FR 9703037
(43) Date de publication de la demande: 29.12.1999
(73) Titulaire: Société d'Applications Routières (S.A.S.), 93303 Aubervilliers (FR)
(72) Inventeur: BLOT, Estelle, F-69003 Lyon (FR); GOUTAILLER, Gilles, F-69008 Lyon (FR)
(74) Mandataire: Tilloy, Anne-Marie
(86) Numéro de dépôt international: FR9800471
(87) Numéro de publication internationale: WO9840424

(56) Documents cités:
- EP-A- 0 343 747
- WO-A-94/21960
- WO-A-96/33241
- GB-A- 611 529
- GB-A- 937 703

## Description

La présente invention concerne des compositions de peinture routière et un procédé pour diminuer le délai d'attente avant la remise en circulation d'une chaussée nouvellement marquée.

La facilité de mise en oeuvre des compositions de peinture routière, la rapidité avec laquelle elles peuvent être appliquées et, surtout, le délai de remise en circulation de la route après marquage constituent des préoccupations importantes des fabricants et applicateurs de peintures routières. Or, actuellement, il faut généralement attendre au moins 5 à 15 minutes (selon la composition de la peinture et la température ambiante) après application d'une peinture routière pour permettre une remise en circulation de la chaussée marquée. Une telle attente entraîne des ralentissements de la circulation d'où une gêne importante occasionnée aux automobilistes et des risques d'accidents, que les fabricants et applicateurs de peintures routières cherchent à limiter au maximum.

Afin de diminuer le délai d'attente avant la remise en circulation d'une chaussée nouvellement marquée, plusieurs solutions ont été envisagées. Ainsi, dans le cas des compositions de peinture routière en milieu solvant organique, il est connu de :
- déposer une plus faible épaisseur de peinture, mais au détriment de la tenue dans le temps d'un tel marquage routier ;
- formuler ces compositions avec des solvants organiques légers, comme par exemple l'acétone, les dérivés cétoniques volatils, le toluène, les acétates, mais, dans ce cas, les risques d'accidents pour l'applicateur sont accrus. En outre, une perte de solvants organiques par évaporation est à la fois préjudiciable pour l'environnement et pour les qualités du marquage : en effet, la volatilité des solvants organiques légers favorise un séchage superficiel des peintures routières et un mauvais séchage à coeur, d'où des risques de mauvaise pénétration des billes de verre et, par voie de conséquence, des risques de rétroreflexion insuffisante ;
- déposer sur la peinture routière une plus grande quantité de billes de verre afin de former un film isolant et de permettre une roulabilité quasi immédiate du marquage routier. Mais cette technique n'est pas satisfaisante car elle requiert, d'une part, un faible dosage de peinture relativement au dosage de billes de verre, d'où des problèmes potentiels d'usure et, d'autre part, la déperdition importante de billes de verre sur la chaussée.

Dans le cas des compositions de peinture routière durcissables par polymérisation, à base de polymères (méth)acryliques en solution dans des monomères réactifs, il est connu d'additionner des accélérateurs de la réaction de polymérisation pour permettre une roulabilité quasi immédiate du marquage routier. Mais, cette technique est vite limitée par l'apparition de jaunissements du film de peinture, d'autant plus forts que la quantité d'accélérateurs est importante.
Les revêtements thermoplastiques utilisés à l'état fondu permettent eux aussi d'obtenir des vitesses de durcissement rapides et, dès lors, des réouvertures de chantiers rapides, mais leur mise en oeuvre est peu productive du fait de la nécessité de faire fondre le produit, ainsi que dangereuse en raison de la température élevée du produit (200°C).

Aucune des solutions précitées pour diminuer le délai d'attente avant la remise en circulation d'une chaussée nouvellement marquée n'est satisfaisante à la fois vis-à-vis du respect de la sécurité et de la santé des fabricants et applicateurs de peinture routière, de l'environnement, de la durabilité du marquage routier et de la visibilité du marquage routier de jour et de nuit.

Dans la demande internationale WO-A-9421960, il est proposé une composition monocomposant de peinture routière comprenant un polyester insaturé, un agent réticulant, au moins un pigment, un agent de suspension, un agent mouillant, des charges, un ou des inhibiteurs de polymérisation, des billes de verre, un catalyseur sous la forme d'une dispersion aqueuse d'un peroxyde de dibenzoyle encapsulé dans un environnement ionique réalisé avec des composés chimiques déterminés, le catalyseur ainsi traité étant fixé sur la surface des billes de verre, un ou plusieurs accélérateurs tels que des sels organiques de cobalt ou la diméthylaniline, et, de préférence, un agent stabilisant vis-à-vis des rayons ultraviolets (UV).

La demande internationale WO-A-9633241 décrit des compositions de peinture à deux ou trois composants pour la réalisation d'une signalisation routière, en particulier sur une chaussée humide, comprenant essentiellement :
- au moins un polyester insaturé ;
- au moins un monomère insaturé éthyléniquement ;
- au moins un accélérateur de polymérisation choisi parmi les dérivés de toluidine ;
- au moins un pigment coloré ;
- au moins un composé capable d'exsuder à la surface de la peinture et d'empêcher l'inhibition de la polymérisation par l'oxygène de l'air ;
- des billes de verre ;
- du peroxyde de dibenzoyle à titre de catalyseur de polymérisation.

Le durcissement de ces compositions de peinture routière, après application, est généralement compris entre 5 et 15 minutes.

Un des buts principaux de la présente invention est de proposer un nouveau procédé et de nouvelles compositions de peintures routières satisfaisant les différents critères précités sans les inconvénients précités et permettant d'atteindre un délai satisfaisant de remise en circulation, pour des applications d'épaisseurs (billes incluses) de l'ordre de 1000 à 2000 µm ou des épaisseurs inférieures.

Par délai satisfaisant de remise en circulation, la demanderesse entend un temps inférieur ou égal à deux minutes entre l'application des compositions de peinture routière et la remise en circulation de la chaussée après marquage, à une température ambiante de l'ordre de 20° C.

Prise dans son premier aspect, la présente invention a donc pour objet un procédé permettant de diminuer le délai entre l'application d'une composition de peinture routière et la remise en circulation d'une chaussée nouvellement marquée à l'aide de cette composition à une valeur inférieure ou égale à 2 minutes dans le cas d'une température extérieure de l'ordre de 20° C, la composition de peinture routière étant appliquée avec une épaisseur égale ou inférieure à 2000 µm, la composition de peinture routière étant à base d'une solution durcissable de polymères dans au moins un monomère réactif et pouvant être :
- une solution (A) d'un ou de plusieurs polyesters insaturés dans au moins un monomère insaturé éthyléniquement et polymérisable avec les polyesters insaturés,
- ou une solution (B) d'un ou de plusieurs polymères (méth)acryliques dans au moins un monomère (méth)acrylique monoinsaturé et, éventuellement, au moins un monomère (méth)acrylique polyinsaturé,
- ou un mélange desdites solutions (A) et (B),
ce procédé étant caractérisé par le fait que l'on réalise la polymérisation de la solution de polymères en présence d'au moins un peroxyde de dibenzoyle halogéné et de peroxyde de dibenzoyle, à titre de catalyseur de la réaction de polymérisation, et en présence d'au moins un accélérateur de la réaction de polymérisation choisi parmi les amines aromatiques tertiaires et les amines aromatiques tertiaires éthoxylées.

Une première caractéristique essentielle de l'invention réside dans l'utilisation d'une combinaison de peroxyde de dibenzoyle et d'au moins un peroxyde de dibenzoyle halogéné, à titre de catalyseur de la polymérisation.

De préférence, en combinaison avec le peroxyde de dibenzoyle, on utilise le peroxyde de dichlorodibenzoyle et, plus particulièrement, le peroxyde de di-(2,4-dichlorobenzoyle). Avantageusement, le peroxyde de dibenzoyle est sous forme pulvérulente.

Les meilleurs résultats, en termes de délai de remise en circulation et résistance mécanique du film de peinture durcie, ont été atteints avec une combinaison de peroxyde de dichlorodibenzoyle et de peroxyde de dibenzoyle et une quantité pondérale de peroxyde de dichlorodibenzoyle au plus égale à 60 % par rapport à la quantité totale de catalyseur.

Dans une composition de peinture à deux ou trois composants, la quantité de peroxyde de dibenzoyle halogéné pur et de peroxyde de dibenzoyle pur est généralement comprise entre 1 et 5 % en poids rapporté à la quantité totale de solution durcissable de polymères et de monomères réactifs, de préférence entre 1,5 % et 4 % en poids.

Selon une première variante avantageuse, afin de faciliter la distribution du catalyseur dans la solution durcissable, au moins une partie du catalyseur (c'est-à-dire au moins une partie du peroxyde de dibenzoyle et/ou au moins une partie du peroxyde de dibenzoyle halogéné) est fixée à la surface d'une charge de granulométrie suffisante avant mise en contact et incorporation au moins partielle de cette charge à la composition de peinture routière. La granulométrie d'une telle charge est généralement comprise entre 100 µm et 1,2 mm, de préférence entre 300 et 800 µm. Cette charge peut être, par exemple, de la silice, de la cristobalite ou du quartz, et, en raison de sa granulométrie, sert principalement à améliorer le caractère antidérapant des peintures routières.

Selon une seconde variante avantageuse, afin de faciliter d'une part la distribution du catalyseur dans la solution durcissable et d'autre part l'application de la peinture routière, au moins une partie du catalyseur (c'est-à-dire au moins une partie du peroxyde de dibenzoyle et/ou au moins une partie du peroxyde de dibenzoyle halogéné) est fixée à la surface de billes de verre avant qu'elles ne soient mises en contact avec la composition de peinture routière.

Dans le cadre de l'invention, l'expression "le catalyseur est fixé à la surface de ..." signifie que le catalyseur (c'est-à-dire le peroxyde de dibenzoyle et/ou le peroxyde de dibenzoyle halogéné) peut être lié physiquement à la surface de la matière en question, ou bien encore, peut être adsorbé dans un revêtement d'agent de fixation, adhérant à la surface de cette matière.

Des techniques de fixation du catalyseur à la surface d'une charge ou de billes de verre, appropriées à la présente invention, sont connues et notamment décrites dans le brevet français n° 2615195.

Une seconde caractéristique essentielle du procédé selon l'invention réside dans l'utilisation d'un accélérateur de polymérisation. A titre d'accélérateur de polymérisation, on peut citer les amines aromatiques tertiaires, telles que les dérivés de la toluidine et les amines aromatiques tertiaires éthoxylées. Ainsi, on peut utiliser les dérivés de la para-toluidine, comme la diéthanol-para-toluidine, la diéthoxy-para-toluidine, la diéthyl-para-toluidine, la diméthyl-para-toluidine ou un mélange des dérivés précités de la para-toluidine. Dans une composition de peinture à deux ou trois composants, l'accélérateur de polymérisation est avantageusement utilisé à raison de 0,05 à 1 % en poids calculé sur la quantité totale de solution durcissable de polymères et de monomères réactifs, de préférence entre 0,05 et 0,8%.

Les compositions de peinture routière convenant à la mise en oeuvre du procédé selon l'invention, peuvent être présentées avant application, sous diverses formes, de préférence, en deux ou trois composants, conservés séparément, de préférence encore en deux composants conservés séparément.

Les compositions de peintures routières, appliquées avec une épaisseur inférieure ou égale à 2000 micromètres, peuvent comprendre deux composants conservés séparément, les deux composants étant mélangés en proportions voulues, juste avant l'application de la peinture ou appliqués successivement sur la chaussée, le premier composant renfermant :
a) au moins une solution durcissable de polymères dans au moins un monomère réactif, choisie parmi : une solution d'un ou de plusieurs polyesters insaturés dans au moins un monomère insaturé éthyléniquement et polymérisable avec les polyesters insaturés, une solution d'un ou de plusieurs polymères (méth)acryliques dans au moins un monomère (méth)acrylique monoinsaturé et, éventuellement, au moins un monomère (méth)acrylique polyinsaturé, et un mélange de ces deux types de solutions ;
b) au moins un accélérateur de la réaction de polymérisation choisi parmi les amines aromatiques tertiaires et les amines aromatiques tertiaires éthoxylées ;
c) au moins un pigment coloré, de préférence un pigment blanc ;
d) au moins un composé capable d'empêcher l'inhibition de la polymérisation par l'oxygène de l'air ;
e) éventuellement au moins une charge minérale de couleur claire, de préférence de couleur blanche ;
et le second composant renfermant :
f) des billes de verre ;
g) à titre de catalyseur de la réaction de polymérisation de la solution durcissable de polymères et de monomères réactifs, une combinaison de peroxyde de dibenzoyle et d'au moins un peroxyde de dibenzoyle halogéné ;
h) éventuellement, un ou plusieurs composés pour répartir et fixer un catalyseur sur la surface des billes de verre ;
i) éventuellement, divers composés organiques et/ou minéraux tels qu'un diluant du catalyseur, par exemple le phtalate de dibutyle ;
j) éventuellement, une charge minérale, par exemple la cristobalite ;
k) éventuellement, au moins une charge antidérapante.

Dans ce second composant, une partie ou la totalité du catalyseur (à savoir, une partie ou la totalité du peroxyde de dibenzoyle et/ou une partie ou la totalité du peroxyde de dibenzoyle halogéné) peut être fixée à la surface des billes de verre. Toutefois, il est préférable de prévoir une quantité suffisante de billes de verre exemptes de catalyseur fixé pour obtenir des revêtements rétroréfléchissants satisfaisants.

Comme indiqué plus haut, les compositions selon l'invention, appliquées avec une épaisseur inférieure ou égale à 2000 micromètres, peuvent également être constituées de trois composants conservés séparément, les trois composants pouvant être mélangés en proportions voulues, juste avant l'application de la peinture ou appliqués successivement sur la chaussée.

Le premier composant de ces compositions tricomposants selon l'invention renferme :
a) au moins une solution durcissable de polymères dans au moins un monomère réactif choisie parmi : une solution d'un ou de plusieurs polyesters insaturés dans au moins un monomère insaturé éthyléniquement et polymérisable avec les polyesters insaturés, une solution d'un ou de plusieurs polymères (méth)acryliques dans au moins un monomère (méth)acrylique monoinsaturé et, éventuellement, au moins un monomère (méth)acrylique polyinsaturé, et un mélange de ces deux types de solutions ;
b) au moins un accélérateur de la réaction de polymérisation choisi parmi les amines aromatiques tertiaires et les amines aromatiques tertiaires éthoxylées ;
c) au moins un pigment coloré, de préférence un pigment blanc ;
d) au moins un composé capable d'empêcher l'inhibition de la polymérisation par l'oxygène de l'air ;
e) éventuellement, au moins une charge minérale de couleur claire, de préférence de couleur blanche ;
le second composant renferme :
f) à titre de catalyseur de la réaction de polymérisation de la solution durcissable, au moins un peroxyde de dibenzoyle halogéné ou le peroxyde de dibenzoyle ou une combinaison desdits peroxydes ;
g) éventuellement, divers composés organiques et/ou minéraux tels qu'un diluant du catalyseur, par exemple le phtalate de dibutyle ;
h) éventuellement, une charge minérale, par exemple la cristobalite.
et, le troisième composant renferme :
i) au moins des billes de verre ;
j) si nécessaire, en complément du catalyseur apporté par le second composant, pour avoir une combinaison de peroxyde de dibenzoyle et d'au moins un peroxyde de dibenzoyle halogéné dans la composition de peinture, au moins un peroxyde de dibenzoyle halogéné ou du peroxyde de dibenzoyle ou une combinaison desdits peroxydes ;
k) éventuellement, divers composés organiques et/ou minéraux ;
l) éventuellement, des charges antidérapantes.

Dans ce troisième composant, une partie ou la totalité du catalyseur (à savoir le peroxyde de dibenzoyle et/ou le peroxyde de dibenzoyle halogéné) peut être fixé à la surface des billes de verre.

Conformément à une variante préférée de réalisation des compositions tricomposants précitées, le catalyseur de la réaction de polymérisation prévu dans le second composant est un mélange de peroxyde de dibenzoyle et d'au moins un peroxyde de dibenzoyle halogéné et le catalyseur de la réaction de polymérisation prévu dans le troisième composant est un mélange de peroxyde de dibenzoyle et d'au moins un peroxyde de dibenzoyle halogéné ou est uniquement constitué de peroxyde de dibenzoyle. Dans ce troisième composant, le catalyseur est, de préférence, pour partie au moins, fixé à la surface des billes de verre.

Selon la présente invention, l'un des constituants essentiels des compositions de peinture routière à deux ou trois composants est une solution durcissable de polymères dans au moins un monomère réactif avantageusement sélectionnée parmi:
- une solution (A) d'un ou de plusieurs polyesters insaturés dans au moins un monomère insaturé éthyléniquement et polymérisable avec les polyesters insaturés ;
- une solution (B) d'un ou de plusieurs polymères (méth)acryliques dans au moins un monomère (méth)acrylique monoinsaturé et, éventuellement, au moins un monomère (méth)acrylique polyinsaturé ;
- un mélange desdites solutions (A) et (B).

Dans le cadre de la présente invention, l'adjectif "(méth)acrylique" signifie, selon le cas, "méthacrylique ou acrylique".

Peuvent être utilisés divers polyesters insaturés (connus de l'homme de l'art) résultant de la polycondensation d'un ou plusieurs polyacides (ou de leur anhydride), l'un d'entre eux au moins étant insaturé, et d'un ou de plusieurs polyalcools choisis par exemple parmi le propylène glycol, l'éthylène glycol, le diéthylène glycol, le dipropylène glycol, le néopentylglycol, le glycérol ou le triméthylolpropane. On peut citer, à titre d'exemple de polyacides insaturés, les acides maléiques, fumariques, citraconiques, itaconiques et mésaconiques, et, à titre d'exemple d'anhydrides insaturés, les anhydrides maléiques, citraconiques et itaconiques.

A titre d'exemple de polyacides saturés, on peut citer les acides ortho-, iso- ou téréphtaliques, adipiques, succiniques, sébaciques ou tétrahydrophtaliques. Comme indiqué plus haut, à la place du polyacide, saturé ou non, on peut utiliser un anhydride de polyacide, par exemple un anhydride des polyacides précités.

Les polyesters insaturés convenant à l'invention sont généralement présentés en solution dans un monomère insaturé éthyléniquement, qui sert de diluant ainsi que de co-monomère. La quantité de solution de polyester insaturé utilisée dans une composition de peinture bi- ou tricomposants est généralement comprise entre 10 et 60 % en poids des composants renfermant une solution durcissable, de préférence de 15 à 40 %. Par ailleurs, la solution de polyester insaturé comprend généralement de 40 à 70 % en poids de polyester insaturé dans le ou les monomères éthyléniquement insaturés.

Comme indiqué ci-dessus, les compositions de peinture routière selon l'invention renferment également un monomère insaturé éthyléniquement, qui est apporté, pour partie au moins, par la solution de polyester insaturé et, si nécessaire, ajouté en complément dans cette composition, généralement pour la diluer. Les monomères insaturés éthyléniquement susceptibles d'être utilisés sont le styrène, le vinyltoluène, le chlorostyrène, le divinylbenzène, l'acétate de vinyle ou un mélange de deux ou plusieurs des monomères précités sous réserve de la compatibilité des monomères entre eux. Ainsi, il est connu de l'homme de l'art que le styrène et l'acétate de vinyle sont des inhibiteurs de polymérisation l'un par rapport à l'autre. A titre de monomères insaturés éthylèniquement, on peut également utiliser, éventuellement en mélange avec les monomères précités, des monomères (méth)acryliques monoinsaturés tels que l'acrylate de butyle et l'acrylate de 2-éthyle hexyle. Aux monomères réactifs précités, on peut avantageusement ajouter des monomères (méth)acryliques polyinsaturés tels que le triméthylpropylène-glycoltriméthacrylate, le tripropylèneglycoldi-(méth)acrylate et le triacrylate.
En revanche, la demanderesse préfère éviter l'utilisation des solvants organiques volatils et non réactifs c'est-à-dire ne renfermant pas d'insaturation éthylénique, comme, par exemple, des alcools, des hydrocarbures aromatiques ou des esters aliphatiques, tels que les acétates d'éthyle, de propyle ou de butyle, le toluène, l'acétone ou la méthyléthylcétone en raison des inconvénients majeurs qu'ils peuvent apporter comme un retard de la prise de la peinture, un ramollissement du film, une sensibilité du film de peinture aux salissures et des risques de pollution de l'environnement.

Les solutions de polymères (méth)acryliques convenant à l'invention renferment au moins un monomère (méth)acrylique monoinsaturé et, éventuellement, un monomère (méth)acrylique polyinsaturé.
De préférence, on utilise des solutions de polymères (méth)acryliques dans un ou plusieurs monomères (méth)acryliques monoinsaturés et un ou plusieurs monomères (méth)acryliques polyinsaturés permettant d'atteindre, après polymérisation et durcissement, une matrice liante ayant une température de transition vitreuse inférieure à environ 50°C.

Les compositions de peinture routière selon l'invention renferment également un pigment coloré, de préférence de couleur blanche. Le pigment préféré est le dioxyde de titane (anatase ou rutile). La quantité de pigment coloré peut varier dans de larges limites et est fonction du type de pigment utilisé. Quand le pigment choisi est le dioxyde de titane, sa quantité est généralement comprise entre 5 et 25 % en poids du composant renfermant une solution durcissable de polymères et de monomères réactifs.

Les compositions selon l'invention renferment également au moins un composé capable d'empêcher l'inhibition de la polymérisation par l'oxygène de l'air : un tel composé est de préférence choisi parmi les substances capables d'exsuder à la surface de la peinture telles que les substances cireuses ayant un point de fusion compris entre 20 et 80°C comme certaines huiles paraffiniques, paraffines ou cires. Le composé capable d'empêcher l'inhibition de la polymérisation par l'oxygène de l'air est généralement utilisé à raison de 0,05 à 0,5 % en poids du composant renfermant une solution durcissable de polymères et de monomères réactifs.
On peut également utiliser des substances capables de piéger l'oxygène de l'air telles que des éthers allyliques.

Les compositions de peinture routière selon l'invention peuvent renfermer, avantageusement, des charges minérales finement divisées (granulométrie maximale de l'ordre de 50 µm) sous réserve qu'elles n'influencent pas de façon défavorable la réaction de polymérisation. A titre d'exemples de charges minérales, on peut citer le carbonate de calcium, le talc, le sulfate de baryum, le trihydrate d'alumine, le mica, le kaolin, ou un mélange des charges précitées. La quantité de charges minérales peut varier dans de larges limites. Elle est de préférence inférieure ou égale à 70 % en poids du composant renfermant une solution durcissable de polymères et de monomères réactifs. Des quantités plus importantes peuvent conduire à une diminution importante des propriétés mécaniques. De préférence encore, cette quantité est supérieure ou égale à 20 % en poids du composant renfermant une solution durcissable de polymères et de monomères réactifs.

Dans le composant des compositions selon l'invention qui renferme une solution durcissable, on peut aussi ajouter des additifs conventionnels dans les peintures routières qui sont :
- un (ou plusieurs) inhibiteur de polymérisation en complément du ou des inhibiteurs de polymérisation qui sont normalement prévus avec les polyesters insaturés et les polymères (méth)acryliques.
   A titre d'exemple d'inhibiteurs de polymérisation, on peut citer : les éthers de quinone tel que l'éther monométhylique de l'hydroquinone; la parabenzoquinone; la méthylhydroquinone; l'éthylhydroquinone; les naphtoquinones; le tertiobutyl-catéchol; le ditertiobutylparacrésol ou un mélange desdits inhibiteurs de polymérisation. La quantité d'inhibiteur de polymérisation est généralement inférieure à 0,01 % en poids rapporté au poids du composant qui renferme une solution durcissable ;
- un (ou plusieurs) agent stabilisant vis à vis des rayons ultraviolets (UV). A titre d'exemple de tels agents, bien connus de l'homme de l'art, on peut citer les benzotriazoles, les benzophénones, les triazines et les HALS (amines tertiaires à fort encombrement stérique, jouant le rôle de capteur de radicaux). La quantité de cet agent est généralement inférieure ou égale à 1 % en poids rapporté au poids des composants qui renferment une solution durcissable ;
- un (ou plusieurs) agent épaississant qui peut être choisi parmi les composés suivants : les polyamides, les argiles gonflantes du type bentonite, la sépiolite, l'attapulgite et l'huile de ricin hydrogénée. La teneur en cet agent est généralement inférieure ou égale à 2 % en poids rapporté au poids des composants qui renferment une solution durcissable ;
- un ou plusieurs agents fluidifiants ;
- un ou plusieurs agents antimousse ;
- un ou plusieurs agents dispersants.

Comme indiqué plus haut, la préparation des compositions de peinture routière selon la présente invention implique également l'utilisation de billes de verre. Des billes de verre peuvent avoir été traitées afin de fixer, à leur surface, une partie au moins du catalyseur de la réaction de polymérisation.
Egalement, les billes de verre peuvent avoir été traitées afin d'en améliorer la mouillabilité et faciliter leur pénétration dans la peinture ou afin de faciliter leur écoulement.

La préparation de la signalisation routière à partir des compositions bi- ou tricomposants de peinture routière selon l'invention peut s'effectuer simplement, de diverses façons.

Pour la préparation du premier composant contenant la solution durcissable de polymères dans au moins un monomère réactif, on procède, de préférence, de la façon suivante :
- dans un premier temps, on introduit dans un récipient sous agitation la totalité ou une partie des produits suivants, dans l'ordre : la solution durcissable de polymères dans au moins un monomère réactif, le composé permettant d'empêcher l'inhibition de la polymérisation par l'oxygène et, éventuellement, en complément, un ou plusieurs monomères réactifs et divers composés tels qu'un inhibiteur de polymérisation ;
- ensuite, on ajoute le pigment coloré et, le cas échéant, une ou plusieurs charges minérales de couleur claire et la préparation ainsi obtenue est maintenue sous agitation jusqu'à l'obtention d'un mélange homogène ;
- enfin, on ajoute à ce mélange homogène l'accélérateur de la polymérisation et, éventuellement, un ou plusieurs autres composés tels qu'un agent épaississant et/ou un agent antimousse et/ou un agent stabilisant vis-à-vis des UV et/ou un agent inhibiteur de polymérisation et/ou un agent fluidifiant, et/ou un agent dispersant, si ces derniers n'ont pas été introduits auparavant en quantité suffisante.

Le premier composant ainsi préparé est maintenu sous agitation jusqu'à l'obtention d'un mélange homogène, à viscosité ajustée en fonction du moyen utilisé pour l'application afin de maintenir, à un débit constant, une épaisseur d'application constante.
Le premier composant peut être appliqué sur une chaussée sèche, à l'aide des moyens usuels (pistolet pulvérisateur airless, pistolet pneumatique, par ex.), et cette application peut être suivie par celle du second composant, et, le cas échéant, par celle du troisième composant. Dans le cas des compositions de peinture routière à trois composants précitées, on procède, de préférence, de la façon suivante, à l'aide de moyens usuels: on pulvérise le second composant dans un jet du premier composant (technique des jets croisés) et, immédiatement après, le jet résultant contenant les premier et second composants est appliqué sur une chaussée sèche, puis on saupoudre le troisième composant.

Généralement, pour préparer une composition de peinture routière selon l'invention, bicomposants, on mélange de une à deux parties en poids du second composant avec une à deux parties en poids du premier composant.
Les compositions de peinture routière selon l'invention permettent d'assurer un délai de remise en circulation satisfaisant et peuvent être appliquées à des températures ambiantes variables pouvant aller de 5 à 50°C. Ainsi, le délai de remise en circulation des peintures selon l'invention n'excède pas 5 minutes. Ce délai est généralement inférieur ou égal à 2 minutes lorsque la température ambiante est de 15° C ou supérieure.

Enfin, la composition de peinture routière selon l'invention conduit à une signalisation routière satisfaisant pleinement les critères principaux exigés, à savoir :
- un jaunissement limité ;
- une visibilité aussi bien de jour que de nuit ;
- une bonne durabilité malgré sa faible épaisseur (au plus égale à 1000 µm, plus généralement de l'ordre de 500 µm), grâce à ses propriétés mécaniques ;
- une bonne résistance au glissement.
En outre, la composition de peinture routière selon l'invention est :
- facile et rapide à mettre en oeuvre ;
- stable en pots sous les différents conditionnements envisageables (deux ou trois composants conservés séparément) ;
- d'un prix de revient économique.

Les exemples ci-après illustrent la présente invention.

### EXEMPLE 1

On prépare une composition de peinture routière tricomposants comme indiqué ci-après.

La composition du premier composant (en % en poids) est la suivante :
- 26 % d'une solution à 65 % ± 2 % en poids d'un polyester insaturé dans le styrène commercialisée sous la dénomination STERPON BD 39-12 par la société SCOTT BADER ;
- 11,6 % de styrène en complément ;
- 47 % de CaCO₃ commercialisé sous la dénomination DURCAL 5 par la société OMYA ;
- 14 % de dioxyde de titane (rutile) commercialisé sous la dénomination RHD2 par la société TIOXIDE ;
- 0,2 % de paraffine 50/52 commercialisée par la société BRITISH PETROLEUM CHEMICAL ;
- 0,9 % d'un agent mouillant à base d'un surfactant anionique à base d'esters de phosphates commercialisé sous la dénomination RHODAFAC RA 600 par la société RHONE POULENC ;
- 0,003 % d'éther monométhylique de l'hydroquinone ;
- 0,2 % d'un agent anti U.V. à base de benzotriazole commercialisé par la société CIBA-GEIGY sous la dénomination TINUVIN 765 ;
- 0,1 % de diéthoxyparatoluidine.

La composition du second composant (en % en poids) est la suivante :
- 12,5 % de peroxyde de di-(2,4-dichlorobenzoyle) dilué à 50 % dans une huile silicone, commercialisé sous la dénomination CHALOXYD DCLBP-50 PSI par la société S.C.P.O.
- 37,5 % de peroxyde de dibenzoyle dilué à 50 % dans un phtalate, commercialisé sous la dénomination CHALOXYD BP-50-FT par la société S.C.P.O. ;
- 50 % de phtalate de dibutyle.

Le troisième composant est constitué par des billes de verre commercialisées sous la dénomination MICROPERL par la société SOVITEC.

Les trois composants sont utilisés dans la proportion massique :
- premier composant : 48,4 %
- second composant : 1,6 %
- troisième composant : 50 %

Les tests d'évaluation sont effectués sur 50 g environ de la formule complète de cette composition de peinture routière tricomposants (la somme massique de tous les composants est égale à 50 g).

Les deux premiers composants sont mélangés dans un récipient à l'aide d'une spatule. Le mélange est ensuite appliqué sur une plaque de fibro-ciment en un film d'une épaisseur de 0,6 mm. Le troisième composant est ensuite saupoudré sur le film. La durée de ces opérations est approximativement d'une minute.
Une roue de taille et poids normalisés (diamètre=100 mm, poids=5,4 kg) est passée sur le film. Lorsque la peinture n'adhère plus à la roue, le film peut être considéré comme roulable.

### Résultats

Une minute après la fin d'application du film à 20° C, cette composition de peinture routière tricomposants est roulable.

### EXEMPLE 2

On prépare une composition de peinture routière tricomposants, à partir des trois composants décrits dans l'exemple 1.

Ces trois composants sont utilisés dans les proportions massiques suivantes :
- premier composant : 49,2 % (soit +0,8 % par rapport à l'exemple 1)
- second composant : 0,8 % (soit -0,8 % par rapport à l'exemple 1)
- troisième composant : 50 %.

Les conditions opératoires des tests d'évaluation de cette composition de peinture routière sont celles de l'exemple 1.

### Résultats

Une minute après la fin d'application du film à 20° C, cette composition de peinture routière tricomposants est roulable.

### EXEMPLE 3

On prépare une composition de peinture routière tricomposants : les premier et troisième composants sont identiques à ceux de l'exemple 1.

La composition du second composant est la suivante (en % en poids) :
- 25 % de peroxyde de di-(2,4-dichlorobenzoyle) dilué à 50 % dans une huile silicone, commercialisé sous la dénomination CHALOXYD DCLBP-50-PSI par la société S.C.P.O. ;
- 25 % de peroxyde de dibenzoyle dilué à 50 % dans un phtalate commercialisé sous la dénomination CHALOXYD BP-50-FT par la société S.C.P.O. ;
- 50 % de phtalate de dibutyle.

Les trois composants sont utilisés dans des proportions massiques identiques à celles de l'exemple 2 :
- premier composant : 49,2 %
- second composant : 0,8 %
- troisième composant : 50 %.

### Résultats

Une minute après la fin d'application du film à 20°C, cette composition de peinture routière tricomposants est roulable.

### EXEMPLE 4

On prépare une composition de peinture routière tricomposants comme indiqué ci-avant.

La composition du premier composant (en % en poids) est la suivante :
- 26,6 % d'une solution à 67 % en poids d'un polyester insaturé dans le styrène commercialisée sous la dénomination NORSODYNE M003 par la société CRAY VALLEY ;
- 11,1 % de styrène, en complément ;
- 47,3 % de CaCO₃ commercialisé sous la dénomination CALFORT 1 par la société REVERTE ;
- 0,3 % de paraffine 50/52 (commercialisée par la société BRITISH PETROLEUM CHEMICAL) chauffée à plus de 50-52° C ;
- 0,2 % de diéthanolparatoluidine commercialisée sous la dénomination PLEXILITH 492 par la société RÖHM ;
- 14,6 % de dioxyde de titane commercialisé sous la dénomination RCL 388 par la société S.C.M. ;
- 0,003 % d'éther monométhylique de l'hydroquinone.

Le premier composant est maintenu sous agitation jusqu'à l'obtention d'un mélange homogène, à viscosité ajustée en fonction du moyen utilisé pour l'application afin de maintenir, à un débit constant, une épaisseur d'application constante.

La composition du second composant (en % en poids) est la suivante :
- 12,5 % de peroxyde de di-(2,4-dichlorobenzoyle) dilué à 50 % dans une huile silicone, commercialisé sous la dénomination CHALOXYD DCLBP-50 PSI par la société S.C.P.O.
- 37,5 % de peroxyde de dibenzoyle dilué à 50 % dans un phtalate commercialisé sous la dénomination CHALOXYD BP-50-FT par la société S.C.P.O. ;
- 50 % de phtalate de dibutyle.

Le troisième composant est constitué par des billes de verre et ne renferme pas de peroxyde.

Les trois composants sont utilisés dans la proportion massique :
- premier composant : 45 %
- second composant : 5 %
- troisième composant : 50 %

Cette composition de peinture routière est appliquée sur une chaussée sèche à l'aide d'un pistolet pulvérisateur (airless), en jets croisés, du premier composant et du second composant de sorte à mélanger ces deux composants avant l'application sur la chaussée en un film d'une épaisseur de l'ordre de 500 µm. Le troisième composant est ensuite saupoudré sur le film.

### Résultats

Cette composition de peinture routière présente, à 20°C, un temps de durcissement très satisfaisant de 1 minute 30 secondes entre son application et la remise en circulation de la route après marquage. En outre, elle présente une bonne adhérence sur chaussée humide après durcissement : en effet, quand elle est soumise au test de l'arrachement par traction selon la norme NF-T 30 062 après une semaine d'application, on constate une rupture cohésive du support de la peinture routière.

### EXEMPLE 5 (Comparatif)

On prépare une composition de peinture routière tricomposants à partir des premier et troisième composants décrits dans l'exemple 1 et à partir d'un second composant constitué de 50 % en poids de peroxyde de dibenzoyle et de 50 % en poids de phtalate de butyle.

Ces trois composants sont utilisés selon les proportions massiques indiquées dans l'exemple 2, c'est-à-dire :
- premier composant : 49,2 %
- second composant : 0,8 %
- troisième composant : 50 %.

L'évaluation de cette peinture routière est effectuée comme indiqué dans l'exemple 1.

### Résultats

Il faut attendre 4 minutes après la fin de l'application du film à 20°C pour que le revêtement préparé avec cette composition de peinture routière soit roulable.

### EXEMPLE 6

On prépare la composition de peinture routière suivante : le premier composant est constitué d'une peinture formulée contenant un polymère acrylique, au moins un monomère (méth)acrylique insaturé et un accélérateur de la réaction de polymérisation.
Cette peinture est commercialisée sous la dénomination BRESSE A par la société S.A.R.

La composition du second composant (en % en poids) est la suivante :
- 14,3 % de peroxyde de di-(2,4-dichlorobenzoyle) dilué à 50 % dans une huile silicone, commercialisé sous la dénomination CHALOXYD DCLBP-50 PSI par la société S.C.P.O.
- 42,8 % de peroxyde de dibenzoyle dilué à 50 % dans un phtalate, commercialisé sous la dénomination CHALOXYD BP-50-FT par la société S.C.P.O. ;
- 42,9 % de phtalate de dibutyle.

Le troisième composant est constitué par des billes de verre commercialisées sous la dénomination MICROPERL par la société SOVITEC.

Les trois composants sont utilisés dans la proportion massique suivante :
- premier composant : 47,8 %
- second composant : 2.2 %
- troisième composant : 50 %

L'évaluation de cette peinture routière est effectuée comme indiqué dans l'exemple 1.

### Résultats

Deux minutes après la fin de l'application à 20°C, cette composition de peinture routière tricomposants est roulable.

### EXEMPLE 7

On prépare une composition de peinture routière à deux composants comme indiqué ci-après.

La composition du premier composant (en % en poids) est la suivante :
- 25,2 % d'une solution à 65 % ± 2 % en poids d'un polyester insaturé dans le styrène commercialisée sous la dénomination STERPON BD 39-12 par la société SCOTT BADER ;
- 14,8 % de styrène en complément ;
- 45,6 % de CaCO₃ commercialisé sous la dénomination DURCAL 5 par la société OMYA ;
- 13,6 % de dioxyde de titane (rutile) commercialisé sous la dénomination RHD2 par la société TIOXIDE ;
- 0,19 % de paraffine 50/52 commercialisée par la société BRITISH PETROLEUM CHEMICAL ;
- 0,87 % d'un agent mouillant à base d'un surfactant anionique à base d'esters de phosphates commercialisé sous la dénomination RHODAFAC RA 600 par la société RHONE POULENC ;
- 0,003 % d'éther monométhylique de l'hydroquinone ;
- 0,19 % d'un agent anti U.V. à base de benzotriazole commercialisé par la société CIBA-GEIGY sous la dénomination TINUVIN 765 ;
- 0,09 % de diéthoxyparatoluidine.

La composition du second composant (en % en poids) est la suivante :
- 60 % de billes de verre contenant un mélange 75/25 de peroxyde de dibenzoyle et de peroxyde de di-(2,4-dichlorobenzoyle) ont été fixés ;
- 30 % de billes de verre "MICROPERL" ;
- 10 % d'agrégats antidérapants,(cristobalite).

Les deux composants sont utilisés dans la proportion massique suivante :
- premier composant : 50 %
- second composant : 50 %

La quantité de peroxydes purs, fixés ou non à la surface des billes de verre, représente 2,25 % en poids de la quantité totale de polyester et de styrène du premier composant.
Après préparation des billes de verre traitées avec le mélange de peroxydes, suivie par la préparation du second composant, on pulvérise la moitié du second composant dans un jet du premier composant. Immédiatement après, le jet résultant est appliqué au moyen d'un pistolet pulvérisateur (airless) sur une chaussée à température ambiante égale à 15° C. Puis on projette dessus le reste du deuxième composant.

La quantité totale de composition de peinture routière appliquée est égale à 700 g/m² de premier composant et 700 g/m² de second composant.

Cette composition de peinture routière à deux composants présente un temps de durcissement de 1,5 minute en surface et un temps de durcissement complet à coeur égal à 2 minutes.

### EXEMPLE 8

On prépare une composition de peinture routière à deux composants, à partir du premier composant décrit dans l'exemple 7 et du second composant suivant (en % en poids) :
- 60 % d'un mélange de billes de verre traitées comprenant :
   . 75 % de billes de verre renfermant du peroxyde de dibenzoyle, préparées selon la technique décrite dans le brevet français n° 2615195 ;
   . 25 % de billes de verre renfermant du peroxyde de di-(2,4-dichlorobenzoyle), préparées selon la technique décrite dans le brevet français n° 2615195 ;
- 30 % de billes de verre "MICROPERL" ;
- 10 % d'agrégats antidérapants (cristobalite)

La quantité totale de peroxydes purs dans cette composition, fixés ou non à la surface des billes de verre, représente 2,25 % en poids de la quantité totale de polyester et de styrène du premier composant.
Après préparation du second composant, on pulvérise la moitié du second composant dans un jet contenant le premier composant. Immédiatement après, le jet résultant est appliqué au moyen d'un pistolet pulvérisateur (airless) sur une chaussée à température ambiante égale à 15° C. Puis on projette dessus le reste du deuxième composant.
La quantité totale de composition de peinture routière appliquée est égale à 700 g/m² de premier composant et 700 g/m² de second composant.

Cette composition de peinture routière est roulable 2 à 3 minutes après la fin de l'application.

## Revendications

1. Procédé permettant de diminuer le délai d'attente entre l'application d'une composition de peinture routière et la remise en circulation d'une chaussée nouvellement marquée à l'aide de cette composition à une valeur inférieure ou égale à 2 minutes dans le cas d'une température extérieure de l'ordre de 20° C, la composition de peinture routière étant appliquée avec une épaisseur égale ou inférieure à 2000 µm, la composition de peinture routière étant à base d'une solution durcissable de polymères dans au moins un monomère réactif et pouvant être :
- une solution (A) d'un ou de plusieurs polyesters insaturés dans au moins un monomère insaturé éthyléniquement et polymérisable avec les polyesters insaturés,
- ou une solution (B) d'un ou de plusieurs polymères (méth)acryliques dans au moins un monomère (méth)acrylique monoinsaturé et, éventuellement, au moins un monomère (méth)acrylique polyinsaturé,
- ou un mélange desdites solutions (A) et (B),
ce procédé étant **caractérisé par le fait que** l'on réalise la polymérisation de la solution de polymères en présence d'au moins un peroxyde de dibenzoyle halogéné et de peroxyde de dibenzoyle, à titre de catalyseur de la réaction de polymérisation, et en présence d'au moins un accélérateur de la réaction de polymérisation choisi parmi les amines aromatiques tertiaires et les amines aromatiques tertiaires éthoxylées.

2. Procédé selon la revendication 1, **caractérisé en ce que** le peroxyde de dibenzoyle halogéné est le peroxyde de dichlorodibenzoyle.

3. Procédé selon la revendication 2, **caractérisé en ce que** la quantité pondérale de peroxyde de dichlorodibenzoyle, par rapport à la quantité totale de catalyseur de polymérisation est au plus égale à 60 %.

4. Procédé selon la revendication 1, 2 ou 3, **caractérisé en ce que** l'on fixe une partie au moins du catalyseur à la surface d'une charge antidérapante ou de billes de verre destinées à la composition de peinture routière.

5. Procédé selon la revendication 1, **caractérisé en ce que** l'accélérateur de la réaction de polymérisation est choisi parmi les dérivés de la toluidine.

6. Compositions de peintures routières, appliquées avec une épaisseur inférieure ou égale à 2000 micromètres, comprenant deux composants conservés séparément, les deux composants étant mélangés en proportions voulues, juste avant l'application de la peinture ou appliqués successivement sur la chaussée, le premier composant renfermant :
a) au moins une solution durcissable de polymères dans au moins un monomère réactif choisie parmi : une solution d'un ou de plusieurs polyesters insaturés dans au moins un monomère insaturé éthyléniquement et polymérisable avec les polyesters insaturés, une solution d'un ou de plusieurs polymères (méth)acryliques dans au moins un monomère (méth)acrylique monoinsaturé et, éventuellement, au moins un monomère (méth)acrylique polyinsaturé et un mélange desdites solutions ;
b) au moins un accélérateur de la réaction de polymérisation choisi parmi les amines aromatiques tertiaires et les amines aromatiques tertiaires éthoxylées ;
c) au moins un pigment coloré, de préférence un pigment blanc ;
d) au moins un composé capable d'empêcher l'inhibition de la polymérisation par l'oxygène de l'air;
e) éventuellement, au moins une charge minérale de couleur claire, de préférence de couleur blanche ;
et le second composant renfermant :
f) des billes de verre ;
g) à titre de catalyseur de la réaction de polymérisation de la solution durcissable de polymères₂ du peroxyde de dibenzoyle et au moins un peroxyde de dibenzoyle halogéné ;
h) éventuellement, un ou plusieurs composés pour répartir et fixer un catalyseur sur la surface des billes de verre ;
i) éventuellement, divers composés organiques et/ou minéraux tels qu'un diluant du catalyseur ;
j) éventuellement, une charge minérale ;
k) éventuellement, au moins une charge antidérapante.

7. Compositions de peinture routière, appliquées avec une épaisseur inférieure ou égale à 2000 micromètres, comprenant trois composants conservés séparément, ces composants pouvant être mélangés en proportions voulues, juste avant l'application de la peinture ou appliqués successivement sur la chaussée, le premier composant renfermant :
a) au moins une solution durcissable de polymères dans au moins un monomère réactif, choisie parmi : une solution d'un ou de plusieurs polyesters insaturés dans au moins un monomère insaturé éthyléniquement et polymérisable avec les polyesters insaturés, une solution d'un ou de plusieurs polymères (méth)acryliques dans au moins un monomère (méth)acrylique monoinsaturé et, éventuellement, au moins un monomère (méth)acrylique polyinsaturé, et un mélange desdites solutions ;
b) au moins un accélérateur de la réaction de polymérisation choisi parmi les amines aromatiques tertiaires et les amines aromatiques tertiaires éthoxylées ;
c) au moins un pigment coloré, de préférence un pigment blanc ;
d) au moins un composé capable d'empêcher l'inhibition de la polymérisation par l'oxygène de l'air;
e) éventuellement, au moins une charge minérale de couleur claire, de préférence de couleur blanche ;
le second composant renfermant :
f) à titre de catalyseur de la réaction de polymérisation de la solution durcissable, le peroxyde de dibenzoyle ou au moins un peroxyde de dibenzoyle halogéné ou une combinaison desdits peroxydes ;
g) éventuellement, divers composés organiques et/ou minéraux tels qu'un diluant du catalyseur ;
h) éventuellement, une charge minérale ;
et un troisième composant renfermant :
i) au moins des billes de verre ;
j) si nécessaire, en complément du catalyseur apporté par le second composant, pour avoir une combinaison de peroxyde de dibenzoyle et d'au moins un peroxyde de dibenzoyle halogéné dans la composition de peinture, au moins un peroxyde de dibenzoyle halogéné ou de peroxyde de dibenzoyle ou une combinaison desdits peroxydes ;
k) éventuellement, divers composés organiques et/ou minéraux ;
l) éventuellement, des charges antidérapantes.

8. Compositions de peinture routière selon la revendication 6 ou 7, **caractérisées en ce que** le peroxyde de dibenzoyle halogéné est le peroxyde de dichlorodibenzoyle.

9. Compositions de peinture routière selon la revendication 8, **caractérisées en ce que** la quantité pondérale de peroxyde de dichlorodibenzoyle par rapport à la quantité totale de catalyseur est au plus égale à 60 %.

10. Compositions de peinture routière selon l'une quelconque des revendications 6 à 9, **caractérisées en ce qu'**au moins une partie du catalyseur est fixée à la surface de la matière destinée à être incorporée dans la composition de peinture routière comme charge antidérapante.

11. Compositions de peinture routière selon l'une quelconque des revendications 6 à 9, **caractérisées en ce qu'**au moins une partie du catalyseur est fixée à la surface des billes de verre destinées à la composition de peinture routière.

## Patentansprüche

1. Verfahren zur Verkürzung der Wartezeit zwischen der Auftragung einer Straßenmarkierungszusammensetzung und der Wiederüberfahrbarkeit einer mit dieser Zusammensetzung neu markierten Straße auf einen Wert kleiner gleich 2 Minuten bei einer Außentemperatur von etwa 20°C, wobei die Straßenmarkierungszusammensetzung in einer Dicke kleiner gleich 2000 µm aufgetragen wird und die Straßenmarkierungszusammensetzung auf einer härtbaren Lösung von Polymeren in mindestens einem reaktiven Monomer basiert, wobei sie :
- eine Lösung (A) eines oder mehrerer ungesättigter Polyester in mindestens einem ethylenisch ungesättigten und mit den ungesättigten Polyestern polymerisierbaren Monomer
- oder eine Lösung (B) eines oder mehrerer (Meth)acrylpolymere in mindestens einem einfach ungesättigten (Meth)acrylmonomer und gegebenenfalls mindestens einem mehrfach ungesättigten (Meth)acrylmonomer
- oder eine Mischung aus der genannten Lösungen (A) und (B)
sein kann,
**dadurch gekennzeichnet, daß** man die Polymerisation der Lösung von Polymeren in Gegenwart von mindestens einem halogenierten Dibenzoylperoxid und Dibenzoylperoxid als Polymerisationskatalysator und in Gegenwart mindestens eines unter tertiären aromatischen Aminen und ethoxylierten tertiären aromatischen Aminen ausgewählten Polymerisationsbeschleunigers durchführt.

2. Verfahren nach Anspruch 1, **dadurch gekennzeichnet, daß** das halogenierte Dibenzoylperoxid Dichlordibenzoylperoxid ist.

3. Verfahren nach Anspruch 2, **dadurch gekennzeichnet, daß** man das Dichlordibenzoylperoxid in einer Gewichtmenge von höchstens 60 Gew.-%, bezogen auf die Gesamtmenge an Polymerisationskatalysator, einsetzt.

4. Verfahren nach Anspruch 1, 2 oder 3, **dadurch gekennzeichnet, daß** man mindestens einen Teil des Katalysators auf der Oberfläche eines griffigen Füllstoffs oder von Glaskugeln für die Straßenmarkierungszusammensetzung fixiert.

5. Verfahren nach Anspruch 1, **dadurch gekennzeichnet, daß** man den Polymerisationsbeschleuniger unter Toluidin-Derivaten auswählt.

6. In einer Dicke kleiner gleich 2000 Mikrometer aufgetragene Straßenmarkierungszusammensetzungen, enthaltend zwei getrennt aufbewahrte Komponenten, die kurz vor der Auftragung der Markierung in den gewünschten Mengen vermischt oder nacheinander auf die Straße aufgetragen werden, wobei die erste Komponente
a) mindestens eine härtbare Lösung von Polymeren in mindestens einem reaktiven Monomer, die unter einer Lösung eines oder mehrerer ungesättigter Polyester in mindestens einem ethylenisch ungesättigten und mit den ungesättigten Polyestern polymerisierbaren Monomer, einer Lösung eines oder mehrerer (Meth)acrylpolymere in mindestens einem einfach ungesättigten (Meth)acrylmonomer und gegebenenfalls mindestens einem mehrfach ungesättigten (Meth)acrylmonomer und einer Mischung aus der genannten Lösungen ausgewählt ist;
b) mindestens einen unter tertiären aromatischen Aminen und ethoxylierten tertiären aromatischen Aminen ausgewählten Polymerisationsbeschleuniger;
c) mindestens ein Farbpigment, vorzugsweise ein Weißpigment;
d) mindestens eine Verbindung, die die Verhinderung der Polymerisation durch Luftsauerstoff zu verhindern befähigt ist;
e) gegebenenfalls mindestens einen mineralischen Füllstoff mit heller Farbe, vorzugsweise weißer Farbe;
enthält
und die zweite Komponente
f) Glaskugeln;
g) als Katalysator für die Polymerisationsreaktion der härtbaren Lösung von Polymeren Dibenzoylperoxid und mindestens ein halogeniertes Dibenzoylperoxid;
h) gegebenenfalls eine oder mehrere Verbindungen zum Verteilen und Fixieren eines Katalysators auf der Oberfläche von Glaskugeln;
i) gegebenenfalls verschiedene organische und/oder anorganische Verbindungen, wie einen Katalysatorverdünner;
j) gegebenenfalls einen mineralischen Füllstoff;
k) gegebenenfalls mindestens einen griffigen Füllstoff
enthält.

7. In einer Dicke kleiner gleich 2000 Mikrometer aufgetragene Straßenmarkierungszusammensetzungen, enthaltend drei getrennt aufbewahrte Komponenten, die kurz vor der Auftragung der Markierung in den gewünschten Mengen vermischt oder nacheinander auf die Straße aufgetragen werden, wobei die erste Komponente
a) mindestens eine härtbare Lösung von Polymeren in mindestens einem reaktiven Monomer, die unter einer Lösung eines oder mehrerer ungesättigter Polyester in mindestens einem ethylenisch ungesättigten und mit den ungesättigten Polyestern polymerisierbaren Monomer, einer Lösung eines oder mehrerer (Meth)acrylpolymere in mindestens einem einfach ungesättigten (Meth)acrylmonomer und gegebenenfalls mindestens einem mehrfach ungesättigten (Meth)acrylmonomer und einer Mischung aus der genannten Lösungen ausgewählt ist;
b) mindestens einen unter tertiären aromatischen Aminen und ethoxylierten tertiären aromatischen Aminen ausgewählten Polymerisationsbeschleuniger;
c) mindestens ein Farbpigment, vorzugsweise ein Weißpigment;
d) mindestens eine Verbindung, die die Verhinderung der Polymerisation durch Luftsauerstoff zu verhindern befähigt ist;
e) gegebenenfalls mindestens einen mineralischen Füllstoff mit heller Farbe, vorzugsweise weißer Farbe;
enthält;
die zweite Komponente
f) als Katalysator für die Polymerisationsreaktion der härtbaren Lösung Dibenzoylperoxid oder mindestens ein halogeniertes Dibenzoylperoxid oder eine Kombination der genannten Peroxide;
g) gegebenenfalls verschiedene organische und/oder anorganische Verbindungen, wie einen Katalysatorverdünner;
h) gegebenenfalls einen mineralischen Füllstoff
enthält
und eine dritte Komponente
i) zumindest Glaskugeln;
j) erforderlichenfalls zwecks Erhalt einer Kombination von Dibenzoylperoxid und mindestens einem halogenierten Dibenzoylperoxid in der Markierungszusammensetzung ergänzend zu dem durch die zweite Komponente beigebrachten Katalysator mindestens ein halogeniertes Dibenzoylperoxid oder Dibenzoylperoxid oder eine Kombination der genannten Peroxide;
k) gegebenenfalls verschiedene organische und/oder anorganische Verbindungen;
l) gegebenenfalls griffige Füllstoffe
enthält.

8. Straßenmarkierungzusammensetzungen nach Anspruch 6 oder 7, **dadurch gekennzeichnet, daß** der halogenierte Dibenzoylperoxid Dichlordibenzyolperoxid ist.

9. Straßenmarkierungszusammensetzungen nach Anspruch 8, **dadurch gekennzeichnet, daß** die Gewichtmenge an Dichlordibenzoylperoxid höchstens 60 Gew.-%, bezogen auf die Gesamtmenge an Katalysator, beträgt.

10. Straßenmarkierungszusammensetzungen nach einem der Ansprüche 6 bis 9, **dadurch gekennzeichnet, daß** zumindest ein Teil des Katalysators auf der Oberfläche des Materials, das als griffiger Füllstoff in die Straßenmarkierungszusammensetzung eingearbeitet werden soll, fixiert ist.

11. Straßenmarkierungszusammensetzungen nach einem der Ansprüche 6 bis 9, **dadurch gekennzeichnet, daß** zumindest ein Teil des Katalysators auf der Oberfläche der Glaskugeln für die Straßenmarkierungszusammensetzung fixiert ist.

## Claims

1. Process that makes it possible to reduce the delay between the application of a road paint composition and the return of traffic to a newly marked highway with this composition at a value that is less than or equal to 2 minutes in the case of an outside temperature on the order of 20°C, whereby the road paint composition is applied with a thickness that is equal to or less than 2000 µm, whereby the road paint composition has a hardening polymer solution base in at least one reactive monomer and can be:
- a solution (A) of one or more unsaturated polyesters in at least one monomer that is ethylenically unsaturated and that can be polymerized with the unsaturated polyesters,
- or a solution (B) of one or more (meth)acrylic polymers in at least one monounsaturated (meth)acrylic monomer and, optionally, at least one polyunsaturated (meth)acrylic monomer,
- or a mixture of said solutions (A) and (B),
whereby this process is **characterized by** the fact that the polymerization of the polymer solution is carried out in the presence of at least one halogenated dibenzoyl peroxide and dibenzoyl peroxide as a catalyst of the polymerization reaction and in the presence of at least one accelerator of the polymerization reaction that is selected from the tertiary aromatic amines and the ethoxylated tertiary aromatic amines.

2. Process according to claim 1, **characterized in that** the halogenated dibenzoyl peroxide is dichlorodibenzoyl peroxide.

3. Process according to claim 2, **characterized in that** the quantity by weight of dichlorodibenzoyl peroxide, relative to the total quantity of polymerization catalyst, is at most equal to 60%.

4. Process according to claim 1, 2 or 3, **characterized in that** at least a portion of the catalyst is attached to the surface of a non-skid filler or glass beads that are intended for the road paint composition.

5. Process according to claim 1, **characterized in that** the accelerator of the polymerization reaction is selected from the toluidine derivatives.

6. Road paint compositions that are applied with a thickness that is less than or equal to 2000 micrometers and that comprise two components that are stored separately, whereby the two components are mixed in desired proportions, just before the application of the paint, or are applied successively to the highway, whereby the first compoment contains:
a) at least one hardening polymer solution in at least one reactive monomer that is selected from: a solution of one or more unsaturated polyesters in at least one monomer that is ethylenically unsaturated and that can be polymerized with the unsaturated polyesters, a solution of one or more (meth)acrylic polymers in at least one monounsaturated (meth)acrylic monomer and, optionally, at least one polyunsaturated (meth)acrylic monomer, and a mixture of said solutions;
b) at least one accelerator of the polymerization reaction that is selected from the tertiary aromatic amines and the ethoxylated tertiary aromatic amines;
c) at least one colored pigment, preferably a white pigment;
d) at least one compound that is able to prevent the inhibition of the polymerization by oxygen of the air;
e) optionally, at least one mineral filler of a light color, preferably white;
and the second component contains:
f) glass beads;
g) as a catalyst of the polymerization reaction of the hardening polymer solution, dibenzoyl peroxide and at least one halogenated dibenzoyl peroxide;
h) optionally, one or more compounds for distributing and attaching a catalyst on the surface of the glass beads;
i) optionally, various organic and/or mineral compounds such as a diluent of the catalyst;
j) optionally, a mineral filler;
k) optionally, at least one non-skid filler.

7. Road paint compositions that are applied with a thickness that is less than or equal to 2000 micrometers and that comprise three components that are stored separately, whereby these components can be mixed in desired proportions, just before the application of the paint, or are applied successively on the highway, whereby the first component contains:
a) at least one hardening polymer solution in at least one reactive monomer that is selected from: a solution of one or more unsaturated polyesters in at least one monomer that is ethylenically unsaturated and that can be polymerized with the unsaturated polyesters, a solution of one or more (meth)acrylic polymers in at least one monounsaturated (meth)acrylic monomer and, optionally, at least one polyunsaturated (meth)acrylic monomer, and a mixture of said solutions;
b) at least one accelerator of the polymerization reaction that is selected from the tertiary aromatic amines and the ethoxylated tertiary aromatic amines;
c) at least one colored pigment, preferably a white pigment;
d) at least one compound that is able to prevent the inhibition of the polymerization by oxygen of the air;
e) optionally, at least one mineral filler of a light color, preferably white;
the second component contains:
f) as a catalyst of the polymerization reaction of the hardening solution, dibenzoyl peroxide or at least a halogenated dibenzoyl peroxide or a combination of said peroxides;
g) optionally, various organic and/or mineral compounds such as a diluent of the catalyst;
h) optionally, a mineral filler;
and a third component contains:
i) at least glass beads;
j) if necessary, in addition to the catalyst provided by the second component, to have a combination of dibenzoyl peroxide and at least one halogenated dibenzoyl peroxide in the paint composition, at least one halogenated dibenzoyl peroxide or dibenzoyl peroxide or a combination of said peroxides;
k) optionally, various organic and/or mineral compounds;
l) optionally, non-skid fillers.

8. Road paint compositions according to claim 6 or 7, **characterized in that** the halogenated dibenzoyl peroxide is dichlorodibenzoyl peroxide.

9. Road paint compositions according to claim 8, **characterized in that** the quantity by weight of dichlorodibenzoyl peroxide relative to the total quantity of catalyst is at most equal to 60%.

10. Road paint compositions according to any of claims 6 to 9, **characterized in that** at least a portion of the catalyst is attached to the surface of the material that is intended to be incorporated in the road paint composition as a non-skid filler.

11. Road paint compositions according of claims 6 to 9, **characterized in that** at least a portion of the catalyst is attached to the surface of the glass beads that are intended for the road paint composition.
